# EUROPEAN PATENT SPECIFICATION

(11) **EP 0 787 638 B1**
(45) Date of publication and mention of the grant of the patent: **17.05.2000**
(21) Application number: 97830025.9
(22) Date of filing: 29.01.1997
(51) Int. Cl.: B61K 3/00, F16N 27/02

(54) **Device for spraying lubricating grease onto a side wall of railway tracks**
Vorrichtung zum Aufsprühen von Schmierfett auf die Seitenflächen von Eisenbahngleisen
Dispositif pour atomisation de graisse lubrifiante sur les faces latérales des voies ferrées

(30) Priority: 31.01.1996 IT VR960009
(43) Date of publication of application: 06.08.1997
(73) Proprietor: Mazzi, Graziadio, 37060 Castel d'Azzano (Verona) (IT); Casoni, Mario, 20121 Milano (IT); Martin, Michael, 2340 Moedling (AT)
(72) Inventor: Mazzi, Graziadio, 37060 Castel d'Azzano (Verona) (IT); Casoni, Mario, 20121 Milano (IT); Martin, Michael, 2340 Moedling (AT)
(74) Representative: Lanzoni, Luciano

(56) References cited:
- US-A- 3 059 724
- US-A- 4 856 617

## Description

The present invention relates to a device for spraying lubricating grease onto a side wall of railway tracks. The device in question is intended to be used in the vicinity of the bends and switching points along the tracks of the railway network (or tramway network, if applicable) so as to ensure less wear of the rails and the wheels of the trains and also reduce the noise and the travelling resistance along the bends and/or at the switching points.

At present, as is known, substantially three types of apparatus exist for lubricating a side wall of railway tracks.

A first type of apparatus, of the known type, is described in Swedish Patent Application No. 7710965-0, whereby the railway track is supplied along a bend, at intervals, with a lubricant emitted by a metering unit provided with a nozzle arranged at a distance from the side wall of the rail to be lubricated. The apparatus forming the subject of this Swedish Patent Application No. 7710965-0 comprises an air container, associated with an air control unit, and a lubricant storage container, which unit and lubricant storage container are connected to the metering unit via lines which incorporate a pump unit.

It has been demonstrated, however, that this apparatus overall is subject to operational malfunctions on account of the unreliability of some components, in particular when there are difficult climatic conditions. In particular, a problem which arises with the apparatus of the known type described relates to the risk of explosion when the air subject to high pressure comes into contact with a lubricant such as grease. Moreover, it is difficult to use compressed air as a control source at temperatures below freezing point since it results in the formation of condensate and ice.

In order to overcome the difficulties mentioned above, a second type of apparatus has been provided, as described in detail in Italian Patent of Industrial Invention No. 1123475.

The invention illustrated in this patent relates to an apparatus and a method for delivering at intervals, by means of a metering unit, a treatment substance, such as grease, stored at high pressure in a tank provided with a discharge outlet for lubricating the tracks of railway lines. Delivery of the grease is performed by means of a propellant gas (nitrogen) available at high pressure in a suitable container connected to the grease tank by means of an inlet arranged at the opposite end to the discharge outlet. The main feature of the apparatus in question consists in the fact that the propellant gas, at a reduced pressure, is intercepted by a control unit able to operate a metering valve, associated with the metering unit, and cause discontinuous emission of the grease via the aforementioned discharge outlet.

This second type of apparatus therefore uses a grease supply system based on the intermittent discharging of a gas and in this way eliminates the problems associated with the use of pumps or the like, such movable components being provided, on the other hand, in the apparatus of prior design.

This latter apparatus, of the known type, also has not a small number of drawbacks.

First of all, such a design involves the use of excessively costly components, such as for example the propellant gas container for keeping the gas at about 50 bar, and a magnetic valve controlled by an electronic unit designed to transmit a gas pulse effect to the metering unit.

Secondly, this apparatus of the known type requires the intervention of operators also for replacement of the empty gas containers. It should be noted that since these lubrication apparatuses must be arranged in the vicinity of the bends and the switching points, it is exremely difficult to arrange for a maintenance service designed to replace periodically all the empty gas containers.

Moreover this constructional design of the known type is somewhat complicated and difficult to install.

A third type of apparatus, of the known type, is described in the Patent No. US 4856617, which show a method and apparatus for controlling the amount of lubricant dispensed by a rotary gear pump by means a number of lubricant applicators.

However, this apparatus has revealed in the practice a bad distribution of the lubricating grease onto the rails.

All the apparatus of the known type for lubricating rails mentioned above do not adequately take into consideration the methods used for distributing the lubricating grease onto the rails with the result that they produce a high degree of wastage and high dispersion of lubricant. This is essentially due to inadequate distribution means.

The main object of the present invention is therefore that of eliminating the drawbacks associated with the apparatus of the known type by providing a new device which allows lubrication of the rails by means of the distribution of lubricating grease without wastage and dispersion.

A further object of the present invention is that of providing a device which is simple from a constructional point of view, operationally quick and reliable and can be installed with great ease.

The technical and novel features of the invention, according to the aforementioned objects, can be clearly understood from the contents of the claims indicated below and the advantages thereof will emerge more clearly from the detailed description which follows, provided with reference to the accompanying drawings, which illustrate a purely exemplary and non-limiting embodiment thereof, in which:

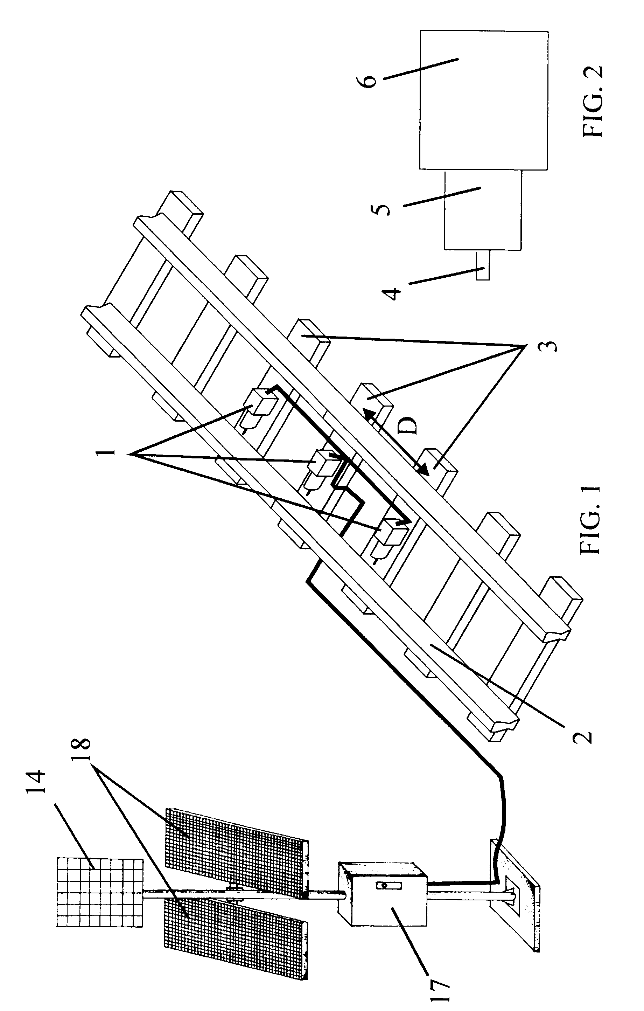

- Figure 1 shows schematically the device in question in its entirety;
- Figure 2 shows a spraying element;

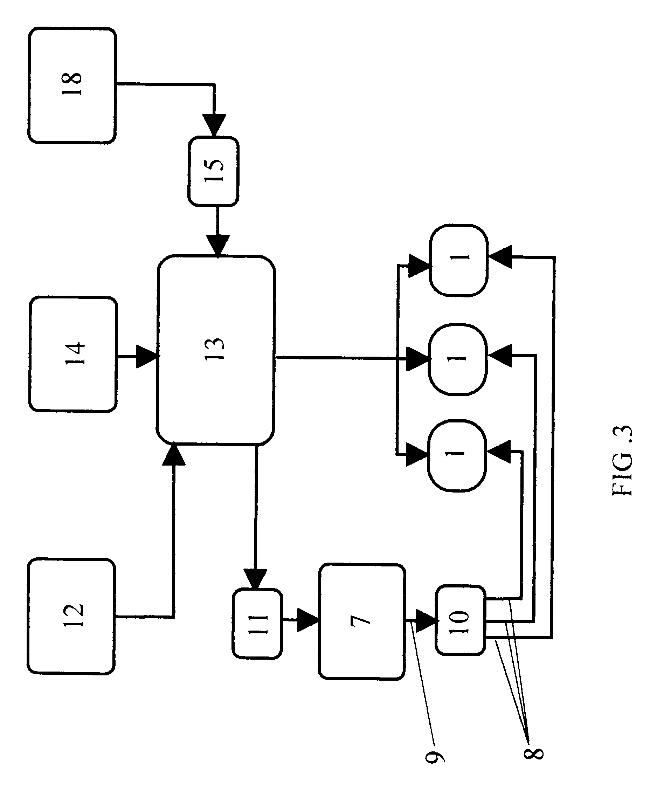

- Figures 3 shows a block diagram illustrating the operating logic of the device in question.

With reference to the accompanying figures, the device in question comprises three sprayers 1 arranged in the vicinity of a side wall 2 of a railway track subject to wear by the flanges of the wheels of trains. In the region of the track bends, this side wall 2 corresponds to the inner side of the rail which is outermost on the bend.

The three spraying elements 1 are mounted on three sleepers 3 adjacent to one another, at a distance from the rail sufficient to allow at least one jet of sprayed grease to reach it, without interfering with the passing train. The spraying elements 1 are three in number and arranged at a distance D from one another suitable for ensuring that the grease is sprayed onto the side wall 2 of the rail either when a spraying element 1 does not function or when the spraying elements 1 are activated with a delay, resulting in one of them being covered by a wheel of the passing train.

Each of the three spraying elements 1 comprises a nozzle 4 designed to spray towards the aforementioned side wall 2 of the rail a quantity of grease present inside a containment chamber 5 communicating with the nozzle 4 itself. Each containment chamber 5 is connected to an electric compressor 6 which is able to blow in a jet of air into the inside thereof and thus cause a jet of grease to be sprayed from each nozzle.

The three containment chambers 5 are supplied by a pump 7 via a grease distributor 10 connected to them by means of three delivery ducts 8 and to the pump 7 by means of an inlet duct 9.

The grease distributor 10 is able to divide up the flow of grease from the pump 7 and distribute it in a regulated manner to the three delivery ducts 8. The pump 7 used is a modular pump, i.e. a type of pump suitable for distributing particularly viscous substances. The pump 7 is connected to a grease tank 11 and is preset so as to cause the grease to flow from the tank 11 to the three containment chambers 5.

A vibration sensor 12 able to detect the arrival of a train is mounted on the railway line in the vicinity of the rails and in a position located at a distance from the spraying elements 1.

The device comprises moreover a central control unit 13 operationally associated with the three spraying elements 1, the pump 7 and the vibration sensor 12, so as to activate a correct phase-sequence designed to cause spraying of grease onto the side wall 2 of the rail.

The central control unit 13 is connected to a power supply unit which in the case of the example illustrated consists of two photovoltaic-cell panels 18 supplying an accumulator 15. The use of solar panels 18 means that the device is able to form an independent unit not connected to power supply lines or batteries which need to be replaced.

The device also envisages the use of an antenna 14 for remote detection of its operating condition and/or for transmission of data or remote operation.

Advantageously, the central control unit 13, the pump 7, the grease tank 11, the grease distributor 10 and the power supply unit are housed inside a container 17 which can be located alongside the railway line, in a position raised from the ground so as to ensure less wear of all the components mentioned.

Operation of the device, which is now described from a substantially structural point of view, is illustrated hereinbelow.

It should be noted first of all that in the case of a railway line with traffic in one direction only, the device is located in the vicinity of the start of the bend, while in the case of traffic in both directions of travel, the device is located about halfway along the bend.

When the vibration sensor 12 detects an approaching train, it sends a signal to the central control unit 13 which, after processing it, activates the electric compressors 6 of the spraying elements 1. The flow of air blown, in the form of a jet, by the electric compressors 6 into the three containment chambers 5 causes three quantities of grease to be sprayed from the nozzles 4 towards the side wall 2 of the rail. Once spraying has occurred, the three containment chambers 5 contain no more grease and the central control unit 13 arranges for sending of an activation signal to the pump 7 which responds, causing grease to flow to the grease distributor 10 which, in turn, distributes by means of the three delivery ducts 8 fresh quantities of grease to the individual containment chambers 5.

The device is thus ready to perform a new spraying operation.

## Claims

1. Device for spraying lubricating grease onto a side wall of railway tracks, comprising at least one spraying element (1) arranged in the vicinity of said side wall (2) of the rails; at least one pump (7) connected to a lubricating grease tank (11) able to cause the lubricating grease to flow from said tank (11) to said spraying element (1); an apparatus (12) which is able to detect the arrival of a train; a central control unit (13) operationally associated with said spraying element (1), said pump (7) and said detecting apparatus (12) for activating a sequence of phases designed to cause at least one jet of lubricating grease to be sprayed onto said side wall (2) of the railway track; a power supply unit connected to said central control unit (13), characterized in that said spraying element (1) comprises at least one nozzle (4) communicating with a containment chamber (5) for the lubricating grease, which receives a metered quantity of lubricating grease from said tank (11) via said pump (7) and is connected to an electric compressor (6) designed to blow a jet of air into said containment chamber (5), thus causing the formation of a concentrated jet of lubricating grease on the side wall (2) of the rail in a confined area facing the nozzle (4).

2. Device according to Claim 1, characterized in that it comprises a plurality of nozzles (4) mounted at a mutual distance (D) such that at least one directed jet of lubricating grease directed from said nozzle (4) to the side wall (2) of the rail is not intercepted by the wheel of a passing train.

3. Device according to any one of the preceding claims, characterized in that, when said directed jet of lubricating grease is sprayed and the containment chamber (5) is consequently emptied, said central control unit (13) sends an actuating signal to said pump (7) so as to cause a new metered quantity of lubricating grease to flow to said containment chamber (5).

4. Device according to Claim 1, characterized in that it comprises an antenna (14) for remotely operating said device, for remotely detecting its operating state and for sending data setting the phase sequence of said central control unit (13).

5. Device according to Claim 1, characterized in that it comprises three spraying elements (1) installed on top of three corresponding sleepers (3) arranged in a position adjacent to one another.

## Patentansprüche

1. Vorrichtung zum Aufsprühen von Schmierfett auf eine Seitenfläche von Eisenbahngleisen, enthaltend wenigstens ein Sprühelement (1), angeordnet in der Nähe der genannten Seitenfläche (2) der Gleise; wenigstens eine Pumpe (7), die an einen Schmierfettbehälter (11) angeschlossen und in der Lage ist, das Schmierfett aus dem genannten Behälter (11) zu dem genannten Sprühelement (1) fliessen zu lassen; ein Gerät (12), welches in der Lage ist, die Ankunft eines Zuges zu erfassen; eine zentrale Steuereinheit (13), die im Betrieb mit dem genannten Sprühelement (1), der genannten Pumpe (7) und dem genannten Erfassungsgerät (12) verbunden ist, um eine Folge von Phasen zu aktivieren, die dazu bestimmt sind zu bewirken, dass wenigstens ein Strahl von Schmierfett auf die Seitenfläche (2) des Eisenbahngleises gesprüht wird; ein Speisegerät, das an die genannte zentrale Steuereinheit (13) angeschlossen ist, **dadurch gekennzeichnet,** dass das genannte Sprühelement (1) wenigstens eine Düse (4) enthält, die mit einer Sammelkammer (5) für das Schmierfett in Verbindung steht, welche über die genannte Pumpe (7) eine abgemessene Menge von Schmierfett aus dem genannten Behälter (11) aufnimmt und an einen Elektrokompressor (6) angeschlossen ist, letzterer dazu bestimmt, einen Luftstrahl in die genannte Sammelkammer (5) zu blasen und somit einen konzentrierten Strahl von Schmierfett auf die Seitenfläche (2) des Gleises in einem abgegrenzten und der Düse (4) zugewandten Bereich zu senden.

2. Vorrichtung nach Patentanspruch 1, **dadurch gekennzeichnet,** dass sie eine Anzahl von Düsen (4) enthält, die in einem solchen gegenseitigen Abstand (D) voneinander montiert sind, dass wenigstens ein von der genannten Düse (4) auf die Seitenfläche (2) des Gleises gerichteter Strahl von Schmierfett nicht von dem Rad eines durchfahrenden Zuges erfasst wird.

3. Vorrichtung nach einem beliebigen der vorstehenden Patentansprüche, **dadurch gekennzeichnet,** dass, wenn der gerichtete Strahl von Schmierfett versprüht und die Sammelkammer (5) folglich entleert ist, die genannte zentrale Steuereinheit (13) ein Auslösesignal an die genannte Pumpe (7) aussendet, welches bewirkt, dass eine neue abgemessene Menge von Schmierfett in die genannte Sammelkammer (5) fliesst.

4. Vorrichtung nach Patentanspruch 1, **dadurch gekennzeichnet,** dass sie eine Antenne (14) zur Fernbedienung der genannten Vorrichtung enthält, um entfernt deren Betriebszustand zu erfassen und Daten zum Einstellen der Phasenfolge der genannten zentralen Steuereinheit (13) auszusenden.

5. Vorrichtung nach Patentanspruch 1, **dadurch gekennzeichnet,** dass sie drei Sprühelemente (1) enthält, die an der Oberseite von drei entsprechenden Schwellen (3) installiert, welche sich in einer aneinandergrenzenden Position befinden.

## Revendications

1. Dispositif pour atomisation de graisse lubrifiante sur les faces latérales des voies ferrées, comprenant au moins un élément atomiseur (1) disposé à proximité d'une face latérale (2) de voie ferrée ; au moins une pompe (7) reliée à un réservoir de graisse lubrifiante (11) en mesure de provoquer le débit de graisse lubrifiante dudit réservoir (11) audit élément atomiseur (1) ; un appareil (12) en mesure de détecter l'arrivée d'un train ; une unité centrale de contrôle (13) associée du point de vue opérationnel avec ledit élément atomiseur (1), ladite pompe (7) et ledit appareil de détection (12) pour l'activation d'une séquence de phases conçue pour produire l'atomisation d'au moins un jet de graisse lubrifiante sur ladite face latérale (2) d'une voie ferrée ; une unité d'alimentation électrique raccordée à ladite unité centrale de contrôle (13) caractérisée en ce que ledit élément atomiseur(1) comprend au moins une buse (4) communiquant avec une chambre de rétention (5) pour la graisse lubrifiante, qui reçoit une quantité mesurée de graisse lubrifiante dudit réservoir (11) à travers ladite pompe (7) et est raccordé à un compresseur électrique (6) conçu pour souffler un jet d'air dans ladite chambre de rétention (5), provoquant ainsi la formation d'un jet comprimé de graisse lubrifiante sur la face latérale (2) du rail dans une zone délimitée faisant face à la buse (4).

2. Dispositif selon la revendication 1, caractérisé en ce qu'il comprend plusieurs buses (4) disposées à égale distance (D) de manière à ce qu'au moins un jet de graisse lubrifiante dirigé de ladite buse (4) vers la face latérale (2) du rail ne soit pas intercepté par la roue d'un train qui passe.

3. Dispositif selon les deux revendications précédentes, caractérisé en ce que, lorsque ledit jet dirigé de graisse lubrifiante est atomisé et que la chambre de rétention (5) par conséquent se vide, ladite unité centrale de contrôle (13) envoie un signal de mise en marche à ladite pompe (7) tel qu'il provoque l'écoulement d'une nouvelle quantité mesurée de graisse lubrifiante dans ladite chambre de rétention (5).

4. Dispositif selon la revendication 1, caractérisé en ce qu'il comprend une antenne (14) pour actionner à distance ledit dispositif, pour détecter à distance son état de fonctionnement et pour envoyer des données réglant la séquence de phases de ladite unité centrale de contrôle (13).

5. Dispositif selon la revendication 1, caractérisé en ce qu'il comprend trois éléments atomiseurs (1) installés sur la face supérieure de trois traverses consécutives (3), un élément atomiseur par traverse.
